(19) Europäisches Patentamt / European Patent Office / Office européen des brevets

(11) **EP 4 345 950 A1**

(12) **EUROPEAN PATENT APPLICATION**
published in accordance with Art. 153(4) EPC

(43) Date of publication:
**03.04.2024 Bulletin 2024/14**

(21) Application number: **22872110.6**

(22) Date of filing: **23.09.2022**

(51) International Patent Classification (IPC):
**H01M 4/505** $^{(2010.01)}$    **H01M 4/525** $^{(2010.01)}$

(52) Cooperative Patent Classification (CPC):
**H01M 4/131; H01M 4/1391; H01M 4/505;
H01M 4/525; H01M 10/0525;** Y02E 60/10

(86) International application number:
**PCT/CN2022/120833**

(87) International publication number:
**WO 2023/046066 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2021 CN 202111126603**

(71) Applicant: **BYD Company Limited
Shenzhen, Guangdong 518118 (CN)**

(72) Inventors:
• **CHENG, Bin**
 **Shenzhen, Guangdong 518118 (CN)**
• **PAN, Yi**
 **Shenzhen, Guangdong 518118 (CN)**
• **ZHUANG, Minghao**
 **Shenzhen, Guangdong 518118 (CN)**
• **DENG, Ruoyi**
 **Shenzhen, Guangdong 518118 (CN)**
• **WU, Pengyu**
 **Shenzhen, Guangdong 518118 (CN)**

(74) Representative: **Arnold & Siedsma
Bezuidenhoutseweg 57
2594 AC The Hague (NL)**

(54) **BATTERY POSITIVE ELECTRODE MATERIAL AND APPLICATION THEREOF**

(57) A battery positive electrode material including lithium ferromanganese phosphate particles and active particles dispersed in voids between the lithium ferromanganese phosphate particles. The active particles include one or more of lithium nickel cobalt manganate particles, lithium nickel cobalt aluminate particles, lithium-rich manganese-based material particles, lithium cobaltate particles, spinel lithium manganate $LiMn_2O_4$ particles and layered lithium manganate $LiMnO_z$ particles. The ratio of the median particle diameter of lithium ferromanganese phosphate to that of the active particles is between 3 and 8. In the battery positive electrode material, the content of percentage by weight of the lithium ferromanganese phosphate is between 70% and 90%, and the content of percentage by weight of the active particles is between 10% and 30%. Further disclosed is application of the battery positive electrode material described above.

~10

FIG. 1

EP 4 345 950 A1

**Description**

**CROSS REFERENCE TO RELATED APPLICATION**

This application claims the priority to Chinese Patent Application No. 202111126603.2 filed with National Intellectual Property Administration, PRC on September 24, 2021 and entitled "BATTERY POSITIVE ELECTRODE MATERIAL AND APPLICATION THEREOF", which is incorporated herein by reference in its entirety.

**FIELD**

The present disclosure relates to the field of secondary batteries, and specifically to a battery positive electrode material and application thereof.

**BACKGROUND**

$LiMPO_4$(M=Fe, Mn, Ni, Co), a phosphate material, has many advantages when it is used as the positive electrode material of a secondary battery, such as stable structure, low reactivity with electrolyte, high safety, good battery cycle, etc. However, existing batteries with a phosphate system have low compaction density and energy density, which is adverse to battery application. Therefore, it is necessary to provide a battery positive electrode material to make the plate have high compaction density, so that the battery can have high energy density, high cycle stability as well as safety.

**SUMMARY**

A first aspect of the present disclosure provides a battery positive electrode material including lithium ferromanganese phosphate particles and active particles filled in voids between the lithium ferromanganese phosphate particles. The active particles include one or more of lithium nickel cobalt manganate particles, lithium nickel cobalt aluminate particles, lithium-rich manganese-based material particles, lithium cobaltate particles, spinel lithium manganate $LiMn_2O_4$ particles and layered lithium manganate LiMnOz particles. The ratio of the median particle diameter of lithium ferromanganese phosphate to that of the active particles is between 3 and 8. In the battery positive electrode material, the content of percentage by weight of the lithium ferromanganese phosphate is between 70% and 90%, and the content of percentage by weight of the active particles is between 10% and 30%.

In an embodiment of the present disclosure, the median particle diameter of the lithium ferromanganese phosphate particles is between $2\mu m$ and $15\mu m$.

In an embodiment of the present disclosure, the median particle diameter of the active particles is between $0.5\mu m$ and $5\mu m$.

In an embodiment of the present disclosure, the active particles include primary active particles and secondary active particles. The median particle diameter of the primary active particles is between $0.5\mu m$ and $5\ \mu m$, and median particle diameter of the secondary active particles is between $0.1\mu m$ and $2\mu m$.

In an embodiment of the present disclosure, the weight ratio of the lithium ferromanganese phosphate particles to the active particles is 1:(0.2-0.35).

In an embodiment of the present disclosure, the lithium ferromanganese phosphate particles include $LiMn_xFe_{1-x}PO_4$, where $0.5 \leq x \leq 0.9$.

In an embodiment of the present disclosure, the lithium ferromanganese phosphate particles include carbon, and the content of percentage by weight of the carbon in the lithium ferromanganese phosphate particles is between 1% and 3%.

In an embodiment of the present disclosure, the lithium ferromanganese phosphate particles further include a doped element. The doped element includes one or more of Ti, V, Co, Ni, Cu, Zn, Mg, Ca, Al, Nb and Mo.

In an embodiment of the present disclosure, the lithium nickel cobalt manganate particles include $LiNi_aCo_bMn_{1-a-b}O_2$, where 0<a<1, 0<b<1, and 0<1-a-b<1.

In an embodiment of the present disclosure, the lithium nickel cobalt manganate particles further include a doped element. The dope element includes one or more of Ti, V, Fe, Cu, Zn, Mg, Ca, Al, Nb and Mo.

In an embodiment of the present disclosure, the lithium nickel cobalt aluminate particles include $LiNi_mCo_nAl_{1-m-n}O_2$, where 0<m< 1, 0<n<1 and 0< 1-m-n< 1.

In an embodiment of the present disclosure, the lithium nickel cobalt aluminate particles further include a doped element. The dope element includes one or more of Ti, V, Mn, Fe, Cu, Zn, Mg, Ca, Nb and Mo.

In an embodiment of the present disclosure, the lithium-rich manganese-based material particles include $yLi_2MnO_3 \cdot (1-y)LiMO_2$, where 0<y< 1, and M includes at least one of Mn, Ni or Co.

In an embodiment of the present disclosure, the lithium-rich manganese-based material particles further include a doped element. The doped element includes one or more of Ti, V, Fe, Co, Cu, Zn, Mg, Ca, Nb and Mo.

In an embodiment of the present disclosure, the battery positive electrode material has compaction density of between $2.4g/cm^3$ and $3.2g/cm^3$.

In an embodiment of the present disclosure, there is no agglomeration between the lithium ferromanganese phosphate particles and the active particles, and the active particles are not attached to the surface of the lithium ferromanganese phosphate particles in the form of coating.

In an embodiment of the present disclosure, the active particles have higher compaction density than the lithium ferromanganese phosphate particles.

A second aspect of the present disclosure provides a positive electrode plate including a current collector and a positive electrode material layer arranged on the current collector. The positive electrode material layer includes the battery positive electrode material according to the first aspect.

A third aspect of the present disclosure provides a secondary battery including a positive electrode, a negative electrode, a separator and an electrolyte. The positive electrode includes the positive electrode plate according to the second aspect.

## BRIEF DESCRIPTION OF THE DRAWINGS

FIG. 1 is a schematic structural view of a battery positive electrode material according to an embodiment of the present disclosure;

FIG. 2 is a schematic structural view of a positive electrode material according to the present disclosure;

FIG. 3 is a schematic structural view of a battery positive electrode material according to an embodiment of the present disclosure; and

FIG. 4 is a scanning electron microscopy image of a battery positive electrode material according to a Example 1 of the present disclosure.

It should be noted that the schematic structural view of the battery positive electrode material shows the particle distribution in two dimensions, but it should actually be a three-dimensional perspective view.

## DETAILED DESCRIPTION

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

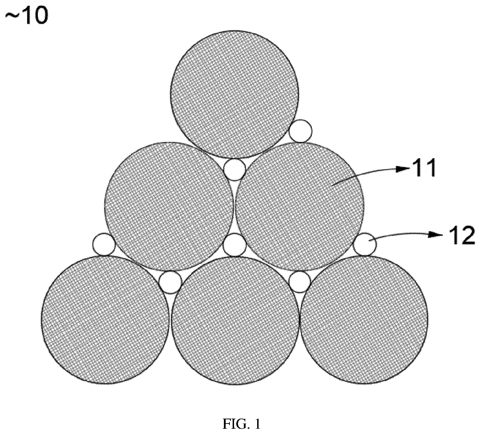

Phosphate positive electrode materials represented by lithium iron phosphate have the advantages of long cycle life, high safety, environmental friendliness and low cost, and play an important role in the positive electrode material system of lithium ion batteries. Compared with lithium iron phosphate, lithium ferromanganese phosphate has higher theoretical energy density. However, the low electron and ion transport rate of lithium ferromanganese phosphate limits performance of its capacity. In order to improve the conductivity of lithium ferromanganese phosphate positive electrode material, it is necessary to coat lithium ferromanganese phosphate with carbon. However, the introduction of carbon will reduce the compaction density of the material. In order to improve the compaction density of the positive electrode material, the present disclosure provides a battery positive electrode material, which is enabled to achieve high gravimetric energy density and volumetric energy density through particle-level collocation of different components, and the battery adopting the battery positive electrode material can have high energy density and safety performance as well as good low-temperature performance. FIG. 1 is a schematic structural view of a battery positive electrode material according to an embodiment of the present disclosure. Referring to FIG. 1, the battery positive electrode material 10 of the present disclosure includes lithium ferromanganese phosphate particles 11 and active particles 12 dispersed in voids between the lithium ferromanganese phosphate particles. In the present disclosure, the active particles and lithium ferromanganese phosphate particles form a physically blended system, with the active particles of a smaller particle diameter filled in the voids between the lithium ferromanganese phosphate particles. It should be noted that in the battery positive electrode material of the present disclosure, there is no agglomeration between particles, and the particles of a smaller particle diameter are not attached to the surface of the particles of a larger particle diameter in the form of coating, but rather are packed with large particles in a mono-dispersed state to form a physically blended system.

In the battery positive electrode material provided by the present disclosure, the lithium ferromanganese phosphate particles have a larger particle diameter, and the active particles of a smaller particle diameter can be filled in the voids between the lithium ferromanganese phosphate particles, and the active particles have higher compaction density than the lithium ferromanganese phosphate particles, so that the overall compaction density of the material is significantly improved without changing the overall volume of the material, enabling the battery positive electrode material to have higher volumetric energy density. Moreover, the weight specific capacity and voltage of the active particles are also higher than those of the lithium ferromanganese phosphate particles, so that the battery positive electrode material also has higher gravimetric energy density. In addition, the active particles have good low-temperature performance, which is beneficial for improving the low-temperature performance of the battery positive electrode material.

In the present disclosure, the lithium ferromanganese phosphate includes $LiMn_xFe_{1-x}PO_4$, where $0.5 \leq x \leq 0.9$. In some implementations of the present disclosure, the lithium ferromanganese phosphate can be doped with an element to improve the conductivity of the lithium ferromanganese phosphate. The doped element may, for example, be one or more of Ti, V, Co, Ni, Cu, Zn, Mg, Ca, Al, Nb and Mo. The content of percentage by weight of the doped element accounts for between 0.2% and 2wt% of all transition metal elements in the lithium ferromanganese phosphate. In some implementations of the present disclosure, the lithium ferromanganese phosphate further includes between 1% and 3wt% of carbon, and a certain amount of carbon is beneficial for improving the conductivity of the battery positive electrode material.

In the present disclosure, the active particles include one or more of lithium nickel cobalt manganate particles, lithium nickel cobalt aluminate particles, lithium-rich manganese-based material particles, lithium cobaltate particles and lithium manganate particles. In an implementation of the present disclosure, the lithium nickel cobalt manganate particles include $LiNi_aCo_bMn_{1-a-b}O_2$, where $0<a<1$, $0<b<1$ and $0<1-a-b<1$. The lithium nickel cobalt aluminate particles include $LiNi_mCo_nAl_{1-m-n}O_2$, where $0<m<1$, $0<n<1$ and $0< 1-m-n< 1$. The lithium-rich manganese-based material particles include $yLi_2MnO_3 \cdot (1-y)LiMO_2$, where $0<y<1$, and M includes at least one of Mn, Ni or Co. The chemical formula of the lithium cobaltate particles is $LiCoO_2$. The lithium manganate particles include one or more of spinel lithium manganate $LiMn_2O_4$ or layered lithium manganate LiMnOz. The adoption of the above active particles can not only improve the energy density of the battery positive electrode material, but also effectively improve the low-temperature performance of the battery, which is beneficial for prolonging the service life of the battery. In some implementations of the present disclosure, a doped element is added in the active particles. The doped element may, for example, be one or more of Ti, V, Co, Ni, Cu, Zn, Mg, Al, Ca, Nb and Mo. Addition of the doped element in the active particles can further improve the conductivity and cycle performance of the battery positive electrode material.

In the present disclosure, the active particles have higher compaction density than the lithium ferromanganese phosphate particles. For example, the compaction density of the lithium cobaltate is $4g/cm^3$, the compaction density of the lithium nickel cobalt manganate particles and lithium nickel cobalt aluminate is between $3.7g/cm^3$ and $3.9g/cm^3$, and the compaction density of the lithium manganate is between $2.9g/cm^3$ and $3.2g/cm^3$. Therefore, the active particles can also improve the volumetric energy density of the battery positive electrode material.

In an implementation of the present disclosure, the content of percentage by weight of the lithium ferromanganese phosphate particles in the battery positive electrode material is between 70% and 90%, and the content of percentage by weight of the lithium ferromanganese phosphate particles in the battery positive electrode material is specifically, but not limited to, 70%, 70%, 75%, 80%, 85% or 90%. High content of the lithium ferromanganese phosphate particles can ensure the good safety performance and cycle performance of the battery positive electrode material. In an implementation of the present disclosure, the content of percentage by weight of the active particles in the battery positive electrode material is between 10% and 30%, and the content of percentage by weight of the active particles in the battery positive electrode material is specifically, but not limited to, 10%, 15%, 20%, 25% or 30%. The content of the active particles within the above range enables the active particles to be fully filled in the voids in the lithium ferromanganese phosphate particles, effectively improving the compaction density of the battery positive electrode material. The content of the active particles within the above range can improve safety of the battery positive electrode material, and the quantity of the active particles within the above range can prevent further enlarging of the voids between the lithium ferromanganese phosphate particles, so that the compaction density is not reduced.

In an implementation of the present disclosure, the ratio of the median particle diameter of the lithium ferromanganese phosphate particles to that of the active particles is between 3 and 8. The ratio of the median particle diameter of the lithium ferromanganese phosphate particles to that of the active particles is specifically, but not limited to, 3, 4, 5, 6, 7 or 8. Through control of the ratio of the median particle diameter of the lithium ferromanganese phosphate particles to that of the active particles can ensure particle gradation for particles of different particle diameters, thereby effectively reducing the void ratio. The ratio of the median particle diameter of the lithium ferromanganese phosphate particles to that of the active particles within the above range enables effective matching between large particles and small particles, thereby further reducing the voids between the particles.

In an implementation of the present disclosure, the median particle diameter $D_{50}$ of the lithium ferromanganese phosphate particles is between $2\mu m$ and $15\mu m$. The median particle diameter $D_{50}$ of the lithium ferromanganese phosphate particles may specifically be, but is not limited to, $2\mu m$, $5\mu m$, $7\mu m$, $10\mu m$ or $15\mu m$. When the median particle diameter of the lithium ferromanganese phosphate particles is within the above range, prolonging of the dispersion path of lithium ions can be prevented, thereby improving the rate performance of the battery. In an implementation of the present disclosure, the median particle diameter $D_{50}$ of the active particles is between $0.5\mu m$ and $5\mu m$. The median particle diameter $D_{50}$ of the active particles may specifically be, but is not limited to, $0.5\mu m$, $1\mu m$, $3\mu m$ or $5\mu m$. The median particle diameter of the active particles within the above range can effectively reduce the void rate. The median particle diameter of the active particles within the above range can achieve good filling effects, thereby reducing the specific surface area of the positive electrode material and improving the processing performance.

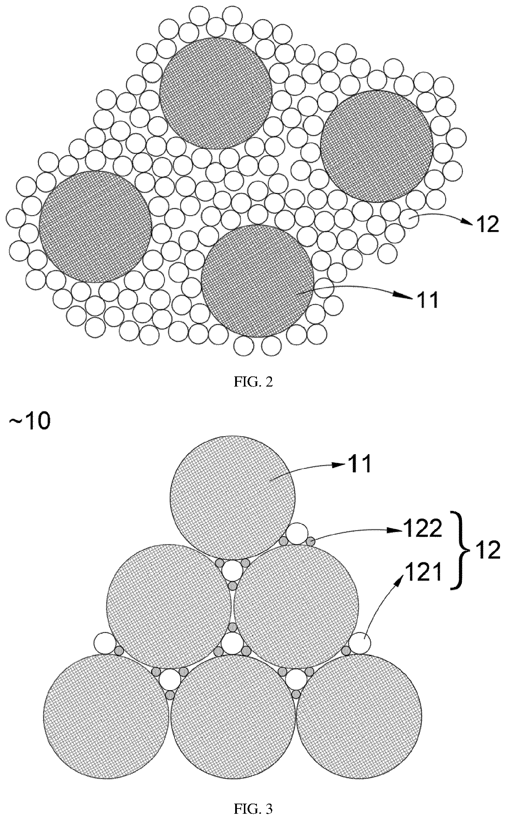

In some implementations of the present disclosure, the weight ratio of the lithium ferromanganese phosphate particles to the active particles is 1:(0.2-0.35). The weight ratio of the lithium ferromanganese phosphate particles to the active particles may specifically be, but is not limited to, 1:0.2, 1:0.25, 1:0.3 or 1:0.35. Provided that the particle diameter of the large particles match with that of the small particles, particle distribution can be optimized by further controlling the weight ratio of the lithium ferromanganese phosphate particles to the active particles, so that the active particles of a smaller particle diameter are filled in the voids between the lithium ferromanganese phosphate particles of a larger particle diameter. That is, the active particles can be directly filled in the voids between the lithium ferromanganese phosphate particles without destroying the original distribution of the voids between the lithium ferromanganese phosphate particles, while the number of the active particles can be kept within a reasonable range, and thus packing between the active particles can be prevented, and consequently the void in the battery positive electrode material can be reduced. FIG. 2 is a schematic structural view of a positive electrode material according to an embodiment of the present disclosure. Referring to FIG. 2, the particle diameter of the active particles in the positive electrode material is smaller than that of the lithium ferromanganese phosphate particles, and the number of the active particles is greater than that of the lithium ferromanganese phosphate particles. Compared with the positive electrode material of FIG. 2, in the positive electrode material of FIG. 1, the particle diameter of the active particles is small, and meanwhile the number of the active particles is kept within a reasonable rage, so as to avoid packing of the active particles and prevent forming of numerous voids between the active particles, thereby effectively improving the compaction density of the positive electrode material. In some implementations of the present disclosure, in a unit volume of battery positive electrode material, the number ratio of lithium ferromanganese phosphate particles is between 25% and 75%. The number ratio refers to the percentage of the number of lithium ferromanganese phosphate particles in the total number of the battery positive electrode material particles. By controlling the number ratio of the lithium ferromanganese phosphate particles, the space utilization can be increased, improving the volumetric energy density of the battery positive electrode material.

In some implementations of the present disclosure, the active particles include primary active particles and secondary active particles. That is, the void between the lithium ferromanganese phosphate particles is filled with active particles of different particle diameters. FIG. 3 is a schematic structural view of a battery positive electrode material according to an embodiment of the present disclosure. Referring to FIG. 3, the active particles 12 are filled in the voids between the lithium ferromanganese phosphate particles 11. The active particles 12 include primary active particles 121 and secondary active particles 122. The secondary active particles 122 are filled between the primary active particles 121 and the lithium ferromanganese phosphate particles 11. In some implementations of the present disclosure, the median particle diameter of the primary active particles is between $0.5\mu m$ and $5\mu m$, and the median particle diameter of the secondary active particles is between $0.1\mu m$ and $2\mu m$. In some implementations of the present disclosure, the ratio of the median particle diameter of the primary active particles to that of the secondary active particles is between 3 and 8. By controlling the ratio of the median particle diameter of the primary active particles to that of the secondary active particles, it can be ensured that the secondary active particles can further be filled in the voids between the active particles and the lithium ferromanganese phosphate particles, thereby sufficiently improving the compaction density of the battery positive electrode material.

In an implementation of the present disclosure, the compaction density of the battery positive electrode material is between $2.4g/cm^3$ and $3.2g/cm^3$. The compaction density of the battery positive electrode material may specifically be, but is not limited to, $2.4g/cm^3$, $2.6g/cm^3$, $2.8g/cm^3$, $3.0g/cm^3$ or $3.2g/cm^3$. The battery positive electrode material of the present disclosure has high compaction density. If it is manufactured into a positive electrode plate which is then applied to a battery, not only the security performance and low-temperature performance of the battery can be improved, but also the battery can have high volumetric energy density and gravimetric energy density.

The present disclosure further provides a method for preparing the battery positive electrode material described above, including:

mixing the lithium ferromanganese phosphate particles with the active particles, by means of one or more of ball milling mixing, powder mixing or liquid phase mixing.

The present disclosure further provides a positive electrode plate including a current collector and a positive electrode material layer arranged on the current collector, where the positive electrode material layer includes the battery positive electrode material of the present disclosure. In the present disclosure, in preparing the positive electrode material layer, the battery positive electrode material, a conductive agent, a binder and a solvent are mixed to form a positive electrode slurry, and the positive electrode slurry is coated and dried to obtain a positive electrode material layer. In formulating the positive electrode slurry, the binder and the solvent can first be mixed and fully stirred, thereafter, the conductive agent is added, after stirring, the battery positive electrode material is added, and then the system is stirred and sifted to obtain the positive electrode slurry. The conductive agent, the binder and the solvent are conventionally selected as in the field of batteries. For example, the binder may be selected from one or more of Polyvinylidene fluoride (PVDF), polytetrafluoroethylene (PTFE), polyvinyl alcohol (PVA), styrene-butadiene rubber (SBR), polyacrylonitrile (PAN), polyimide (PI), polyacrylic acid (PAA), polyacrylate, polyolefin, sodium carboxymethyl cellulose (CMC) and sodium alginate. The conductive agent may be selected from one or more of carbon nanotubes, carbon black and graphene.

The present disclosure further provides a secondary battery including a positive electrode, a negative electrode, an electrolyte and a separator located between the positive electrode and the negative electrode. The positive electrode includes a positive electrode plate provided by the present disclosure.

In the present disclosure, the negative electrode of the secondary battery may be any negative electrode well known in the art. In an implementation of the present disclosure, the negative electrode may include one or more of a carbon-based negative electrode, a silicon-based negative electrode, a tin-based negative electrode and a lithium negative electrode. The carbon-based negative electrode may include graphite, hard carbon, soft carbon, graphene, etc. The silicon-based negative electrode may include a silicon-containing material such as silicon, silicon carbon, silicon oxide, and silicon metal compounds, or a mixed material of this silicon-containing material and a non-silicon-containing material such as graphite. The tin-based negative electrode may include a tin-containing material such as tin, tin carbon, tin oxide, tin metal compound, or a mixed material of this tin-containing material and a non-tin-containing material such as graphite. The lithium negative electrode may include metallic lithium or a lithium alloy. The lithium alloy may specifically be at least one of lithium silicon alloy, lithium sodium alloy, lithium potassium alloy, lithium aluminum alloy, lithium tin alloy and lithium indium alloy. In some embodiments of the present disclosure, the current collector of the negative electrode is copper foil, and the active material of the negative electrode includes one or more of natural graphite, artificial graphite, hard carbon, soft carbon, lithium titanate, iron oxide, lithium titanium phosphate, titanium dioxide, silicon, silicon oxide, tin and its oxide, and antimony and its oxide. The binder includes one or more of polyacrylic acid (PAA), polyvinylidene fluoride (PVDF), carboxymethyl cellulose (CMC) and styrene-butadiene latex (SBR). The conductive agent includes one or more of acetylene black, Keqin carbon black, Super-P, carbon nanotubes, carbon nanofibers, activated carbon and graphene. In the present disclosure, the negative electrode can be prepared by a preparation method well known in the art.

In the present disclosure, the separator of the secondary battery may be any separator well known to those skilled in the art. For example, the separator may be one or more of polyolefin microporous membrane, polyethylene terephthalate, polyethylene felt, glass fiber felt or superfine glass fiber paper.

In the present disclosure, the electrolyte of the secondary battery includes a solution of electrolyte lithium salt in a non-aqueous solvent. In an implementation of the present disclosure, electrolyte lithium salts include one or more of lithium hexafluorophosphate ($LiPF_6$), lithium perchlorate ($LiClO_4$), lithium tetrafluoroborate ($LiBF_4$), lithium hexafluoroarsenate ($LiAsF_6$), lithium hexafluorosilicate ($Li_2SiF_6$), lithium tetraphenylborate ($LiB(C_6H5)_4$), lithium chloride (LiCl), lithium bromide (LiBr), lithium chloroaluminate ($LiAlCl_4$), lithium fluoroalkyl sulfonate ($LiC(SO_2CF_3)_3$), $LiCH_3SO_3$, $LiN(SO_2CF_3)_2$ and $LiN(SO_2C_2F_5)_2$. In some implementations of the present disclosure, the non-aqueous solvent includes one or more of chain acid esters and cyclic acid esters. In some implementations of the present disclosure, the chain acid esters include one or more of dimethyl carbonate (DMC), diethyl carbonate (DEC), methyl ethyl carbonate (EMC), methyl propyl carbonate (MPC) and dipropyl carbonate (DPC). In some implementations of the present disclosure, the chain acid esters include chain organic esters containing fluorine, sulfur or unsaturated bonds. In some implementations of the present disclosure, the cyclic acid esters include one or more of ethylene carbonate (EC), propylene carbonate (PC), vinylene carbonate (VC), $\gamma$-butyrolactone ($\gamma$-BL) and sultone. In some implementations of the present disclosure, the cyclic acid esters include cyclic organic esters containing fluorine, sulfur or unsaturated bonds. In some implementations of the present disclosure, the non-aqueous solvent includes one or more of chain ether and cyclic ether solutions. In some implementations of the present disclosure, cyclic ethers include one or more of tetrahydrofuran (THF), 2-methyltetrahydrofuran (2-MeTHF), 1,3- dioxolane (DOL) and 4-methyl-1,3-dioxolane (4-MeDOL). In some implementations of the present disclosure, cyclic ethers include cyclic organic ethers containing fluorine, sulfur or unsaturated bonds. In some implementations of the present disclosure, chain ethers include one or more of dimethoxymethane (DMM), 1,2-dimethoxyethane (DME), 1,2- dimethoxypropane (DMP) and diethylene glycol dimethyl ether (DG). In some implementations of the present disclosure, chain ethers include chain organic ethers containing fluorine, sulfur or unsaturated bonds. In some implementations of the present disclosure, the concentration of electrolyte lithium salt in the electrolyte is between 0.1mol/L and 15mol/L. In some implementations of the present disclosure, the concentration of electrolyte lithium salt is between 1mol/L and 10mol/L.

In some implementations of the present disclosure, the secondary battery can be prepared by either of the lamination process and the winding process. In some implementations of the present disclosure, the battery is prepared by the lamination process.

The technical solution of the present disclosure is described in detail below with multiple embodiments.

Example 1

A method for preparing a battery positive electrode material includes:

800g of lithium ferromanganese phosphate and 200g of lithium nickel cobalt manganate were added into a mixer for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 15$\mu$m. The chemical formula of lithium nickel cobalt manganate was $LiNi_{0.8}Co_{0.1}Mn_{0.1}O_2$ and the median particle diameter $D_{50}$ of lithium nickel cobalt manganate was 3.2$\mu$m. The system was mechanically mixed for 5h at the speed of 30rpm to obtain the battery positive electrode material.

The prepared battery positive electrode material, the conductive agent and the binder were dispersed in N-methylpyrrolidone according to the weight ratio of 90: 5: 5, where the conductive agent was carbon nanotubes, the binder was PVDF5130, and the solid content of the slurry was 50%. The slurry was coated on the surface of the aluminum foil with the surface density of coating of 200g/m$^2$. After drying, the plate was cut into a 15mm positive electrode plate, which was assembled with the separator and lithium sheet to form a 2032 button half cell.

Example 2

A method for preparing a battery positive electrode material includes:

800g of lithium ferromanganese phosphate and 200g of lithium nickel cobalt aluminate were added into a ball milling tank for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 15$\mu$m. The chemical formula of lithium nickel cobalt aluminate was $LiNi_{0.8}Co_{0.15}Al_{0.05}O_2$, and the median particle diameter $D_{50}$ of lithium nickel cobalt aluminate was 3.2$\mu$m. Zirconium balls were added and the system was ball-milled for 5h to obtain the battery positive electrode material. A battery was prepared with the same method as that in the Example 1.

Example 3

A method for preparing a battery positive electrode material includes:

800g of lithium ferromanganese phosphate, 100g of lithium nickel cobalt manganate and 100g of lithium cobaltate ($LiCoO_2$) were added into a ball milling tank for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 15$\mu$m. The chemical formula of lithium nickel cobalt manganate was $LiNi_{0.8}Co_{0.1}Mn_{0.1}O_2$ and the median particle diameter $D_{50}$ of lithium nickel cobalt manganate was 3.2$\mu$m. The median particle diameter of lithium cobaltate was 3.2$\mu$m. Zirconium balls were added and the system was ball-milled for 5h to obtain the battery positive electrode material. A battery was prepared with the same method as that in the Example 1.

Example 4

A method for preparing a battery positive electrode material includes:

800g of lithium ferromanganese phosphate, 100g of lithium nickel cobalt manganate and 100g of lithium-rich manganese-based material werer added into a ball milling tank for mixing. The chemical formula of lithium ferromanganese phosphate was $LiMn_{0.6}Fe_{0.4}PO_4$, the carbon content of lithium ferromanganese phosphate was 1.5% and the median particle diameter $D_{50}$ of lithium ferromanganese phosphate was 15 $\mu$m. The chemical formula of lithium nickel cobalt manganate was $LiNi_{0.8}Co_{0.1}Mn_{0.1}O_2$ and the median particle diameter $D_{50}$ of lithium nickel cobalt manganate was 3.2$\mu$m. The chemical formula of lithium-rich manganese-based material was $0.5Li_2MnO_3 \cdot 0.5LiMnO_2$, and the median particle diameter of lithium-rich manganese-based material was 3.2$\mu$m. Zirconium balls were added and the system was ball-milled for 5h to obtain the battery positive electrode material. A battery was prepared with the same method as that in the Example 1.

Example 5

A method for preparing a battery positive electrode material includes:

800g of lithium ferromanganese phosphate and 200g of lithium nickel cobalt manganate were added into a mixer for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 15$\mu$m. The chemical formula of lithium nickel cobalt manganate was $LiNi_{0.8}Co_{0.1}Mn_{0.1}O_2$ and the median

particle diameter $D_{50}$ of lithium nickel cobalt manganate is 3.5μm. The system was mechanically mixed for 5h at the speed of 30rpm to obtain the battery positive electrode material. A battery was prepared with the same method as that in the Example 1.

Example 6

A method for preparing a battery positive electrode material includes:

900g of lithium ferromanganese phosphate and 100g of lithium nickel cobalt aluminate were added into a ball milling tank for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 15μm. The chemical formula of lithium nickel cobalt aluminate was $LiNi_{0.8}Co_{0.15}Al_{0.05}O_2$, and the median particle diameter $D_{50}$ of lithium nickel cobalt aluminate was 3.5μm. Zirconium balls were added and the system was ball-milled for 5h to obtain the battery positive electrode material. A battery was prepared with the same method as that in the Example 1.

Example 7

A method for preparing a battery positive electrode material includes:

700g of lithium ferromanganese phosphate and 300g of lithium nickel cobalt manganate were added into a ball milling tank for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 15μm. The chemical formula of lithium nickel cobalt manganate was $LiNi_{0.8}Co_{0.1}Mn_{0.1}O_2$ and the median particle diameter $D_{50}$ of lithium nickel cobalt manganate was 3.5μm. Zirconium balls were added and the system was ball-milled for 5h to obtain the battery positive electrode material. A battery was prepared with the same method as that in the Example 1.

Example 8

A method for preparing a battery positive electrode material includes:

800g of lithium ferromanganese phosphate and 200g of lithium nickel cobalt manganate were added into a mixer for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 12μm. The chemical formula of lithium nickel cobalt manganate was $LiNi_{0.8}Co_{0.1}Mn_{0.1}O_2$ and the median particle diameter $D_{50}$ of lithium nickel cobalt manganate was 4μm. The system was mechanically mixed for 5h at the speed of 30rpm to obtain the battery positive electrode material. A battery was prepared with the same method as that in the Example 1.

Example 9

A method for preparing a battery positive electrode material includes:

800g of lithium ferromanganese phosphate and 200g of lithium nickel cobalt aluminate were added into a ball milling tank for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 12μm. The chemical formula of lithium nickel cobalt aluminate was $LiNi_{0.8}Co_{0.15}Al_{0.05}O_2$, and the median particle diameter $D_{50}$ of lithium nickel cobalt aluminate was 2.4μm. Zirconium balls were added and the system was ball-milled for 5h to obtain the battery positive electrode material. A battery was prepared with the same method as that in the Example 1.

Example 10

A method for preparing a battery positive electrode material includes:

800g of lithium ferromanganese phosphate and 200g of lithium nickel cobalt manganate were added into a ball milling tank for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 12μm. The chemical formula of lithium nickel cobalt manganate was $LiNi_{0.8}Co_{0.1}Mn_{0.1}O_2$ and the median particle diameter $D_{50}$ of lithium nickel cobalt manganate was 1.5μm. Zirconium balls were added and the system was ball-milled for 5h to obtain the battery positive electrode material. A battery was prepared with the same method as that in the Example 1.

Example 11

A method for preparing a battery positive electrode material includes:

800g of lithium ferromanganese phosphate, 180g of primary lithium nickel cobalt manganate and 20g of secondary lithium nickel cobalt manganate were added into a ball milling tank for mixing. The chemical formula of lithium ferromanganese phosphate was $LiMn_{0.6}Fe_{0.4}PO_4$, the carbon content in lithium ferromanganese phosphate was 1.5%, and the median particle diameter $D_{50}$ of lithium ferromanganese phosphate was 15$\mu$m. The chemical formula of primary lithium nickel cobalt manganate was $LiNi_{0.8}Co_{0.1}Mn_{0.1}O_2$ and the median particle diameter $D_{50}$ of lithium nickel cobalt manganate was 3.2$\mu$m. The chemical formula of secondary lithium nickel cobalt manganate was $LiNi_{0.8}Co_{0.1}Mn_{0.1}O_2$ and the median particle diameter $D_{50}$ of lithium nickel cobalt manganate was 1.0$\mu$m. Zirconium balls were added and the system was ball-milled for 5h to obtain the battery positive electrode material. A battery was prepared with the same method as that in the Example 1.

Comparative Example 1

Lithium ferromanganese phosphate $LiMn_{0.6}Fe_{0.4}PO_4$ with a median particle diameter $D_{50}$ of 15$\mu$m was used as the positive electrode material, and the positive electrode material, a conductive agent and a binder were dispersed in N-methylpyrrolidone according to the weight ratio of 90: 5: 5, where the conductive agent was carbon nanotubes, the binder was PVDF5130, and the solid content of the slurry was 50%. The slurry was coated on the surface of an aluminum foil with the surface density of coating of 200g/m$^2$. After drying, the plate was cut into a 15mm plate, which was assembled with a separator and lithium sheet to form a 2032 button half cell.

Comparative Example 2

950g of lithium ferromanganese phosphate and 50g of lithium nickel cobalt manganate were added into a ball milling tank for mixing. The chemical formula of lithium ferromanganese phosphate was $LiMn_{0.6}Fe_{0.4}PO_4$, and the median particle diameter $D_{50}$ of lithium ferromanganese phosphate was 15$\mu$m. The chemical formula of lithium nickel cobalt manganate was $LiNi_{0.8}Co_{0.1}Mn_{0.1}O_2$ and the median particle diameter $D_{50}$ of lithium nickel cobalt manganate was 3.5$\mu$m. Zirconium balls are added and the system was ball-milled for 5h to obtain the battery positive electrode material. A battery was prepared with the same method as that in the Comparative Example 1.

Comparative Example 3

600g of lithium ferromanganese phosphate and 400g of lithium nickel cobalt manganate were added into a ball milling tank for mixing. The chemical formula of lithium ferromanganese phosphate was $LiMn_{0.6}Fe_{0.4}PO_4$, and the median particle diameter $D_{50}$ of lithium ferromanganese phosphate was 15$\mu$m. The chemical formula of lithium nickel cobalt manganate was $LiNi_{0.8}Co_{0.1}Mn_{0.1}O_2$ and the median particle diameter $D_{50}$ of lithium nickel cobalt manganate was 3.5$\mu$m. Zirconium balls were added and the system was ball-milled for 5h to obtain the battery positive electrode material. A battery was prepared with the same method as that in the Comparative Example 1.

Comparative Example 4

800g of lithium ferromanganese phosphate and 200g of lithium nickel cobalt manganate were added into a ball milling tank for mixing. The chemical formula of lithium ferromanganese phosphate was $LiMn_{0.6}Fe_{0.4}PO_4$, and the median particle diameter $D_{50}$ of lithium ferromanganese phosphate was 12$\mu$m. The chemical formula of lithium nickel cobalt manganate was $LiNi_{0.8}Co_{0.1}Mn_{0.1}O_2$ and the median particle diameter $D_{50}$ of lithium nickel cobalt manganate was 1$\mu$m. Zirconium balls were added and the system was ball-milled for 5h to obtain the battery positive electrode material. A battery was prepared with the same method as that in the Comparative Example 1.

Comparative Example 5

800g of lithium ferromanganese phosphate and 200g of lithium nickel cobalt manganate were added into a ball milling tank for mixing. The chemical formula of lithium ferromanganese phosphate was $LiMn_{0.6}Fe_{0.4}PO_4$, and the median particle diameter $D_{50}$ of lithium ferromanganese phosphate was 12$\mu$m. The chemical formula of lithium nickel cobalt manganate was $LiNi_{0.8}Co_{0.1}Mn_{0.1}O_2$ and the median particle diameter $D_{50}$ of lithium nickel cobalt manganate was 5$\mu$m. Zirconium balls were added and the system was ball-milled for 5h to obtain the battery positive electrode material. A battery was prepared with the same method as that in the Comparative Example 1.

Comparative Example 6

800g of lithium ferromanganese phosphate, 100g of lithium nickel cobalt manganate and 100g of lithium manganate were added into a ball milling tank for mixing. The chemical formula of lithium ferromanganese phosphate was $LiMn_{0.6}Fe_{0.4}PO_4$, and the median particle diameter $D_{50}$ of lithium ferromanganese phosphate was 1.5$\mu$m. The chemical formula of lithium nickel cobalt manganate was $LiNi_{0.8}Co_{0.1}Mn_{0.1}O_2$, the median particle diameter $D_{50}$ of lithium nickel cobalt manganate was 15$\mu$m. The chemical formula of lithium manganate was $LiMn_2O_4$ and the median particle diameter $D_{50}$ of lithium manganate was 15$\mu$m. Zirconium balls were added and the system was ball-milled for 5h to obtain the battery positive electrode material. A battery was prepared with the same method as that in the Comparative Example 1.

Effect Examples

To verify the performance of the battery manufactured by the present disclosure, the present disclosure further provides an effect embodiment.

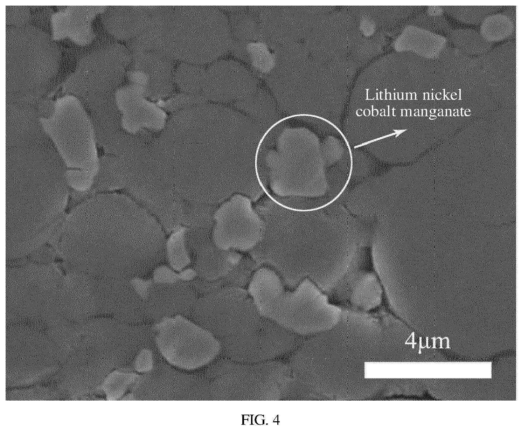

1) FIG. 4 is a scanning electron microscopy image of a battery positive electrode material according to a Example 1 of the present disclosure. Referring to FIG. 4, in this Figure, the particles of higher brightness are lithium nickel cobalt manganate particles, and the particles of lower brightness are lithium ferromanganese phosphate particles. As can be seen from FIG. 4, in the battery positive electrode material of the Example 1, small particles of lithium nickel cobalt manganate are tightly filled in the voids between lithium ferromanganese phosphate particles. The particle diameter distribution of the battery positive electrode materials of the Example1 to 11 and the Comparative Example 1 to 6 was obtained by a laser particle diameter analyzer, and the median particle diameter $D_{50}$ of the battery positive electrode materials of the Example 1 to 11 and the first to Comparative Example 1 to 6 was obtained according to the particle diameter distribution. See Table 1 for the test results.

2) The compaction density of the positive electrode plates of the Example 1 to 11 and the Comparative Example 1 to 6 was measured in the following manner. The positive electrode plates of the Example 1 to 11 and the Comparative Example 1 to 6 were compacted. A disk with a fixed radius R was cut off from the surface of the positive electrode plate, and its weight M1 and thickness H1 were measured. An aluminum foil disk with the same radius was cut off and its weight M2 and thickness H2 were measured. The compaction density can obtained by dividing the weight difference by the volume of the positive electrode dressing. The formula for calculation of the compaction density was as follows.

$$\text{compaction density } \rho = \frac{M1-M2}{\pi R^2 (H1-H2)}$$

3) The electrochemical performance of the batteries of the Example 1 to 11 and the Comparative Example 1 to 6 was tested. The batteries of the Example 1 to 11 and the Comparative Example 1 to 6 were charged at a constant current of 0.1C and a constant voltage within a voltage test range of 2.8-4.3V at 25°C with a cut-off current of 0.02C, and discharged at a constant current of 0.1C. The initial charge capacity and discharge capacity are recorded. The parameters of the batteries were calculated according to the following formula: specific discharge capacity = battery initial discharge capacity (mAh)/weight of positive electrode material (g), initial coulombic efficiency = initial discharge capacity/initial charge capacity, gravimetric energy density = specific discharge capacity (mAh/g)* average discharge voltage (V), and volumetric energy density = gravimetric energy density (Wh/kg)* compaction density (g/cm$^3$). See Table 1 for the test results.

Table 1 Table of battery positive electrode materials and battery parameters of the Examples 1 to 11 and the Comparative Examples 1 to 6

| Experimental group | Particle diameter $D_{50}$ ($\mu$m) | Compaction density (g·cm$^{-3}$) | Specific discharge capacity (mAh·g$^{-1}$) | Initial coulombic efficiency (%) | Gravimetric energy density (Wh·kg$^{-1}$) | Volumetric energy density (Wh L$^{-1}$) |
|---|---|---|---|---|---|---|
| Example 1 | 12.56 | 2.54 | 162.2 | 91.0 | 586 | 1488 |
| Example2 | 12.75 | 2.52 | 160.9 | 91.5 | 584 | 1472 |
| Example3 | 12.67 | 2.57 | 157.8 | 91.6 | 573 | 1473 |

(continued)

| Experimental group | Particle diameter $D_{50}$ ($\mu$m) | Compaction density (g·cm$^{-3}$) | Specific discharge capacity (mAh·g$^{-1}$) | Initial coulombic efficiency (%) | Gravimetric energy density (Wh·kg$^{-1}$) | Volumetric energy density (Wh L$^{-1}$) |
|---|---|---|---|---|---|---|
| Example 4 | 12.54 | 2.48 | 167.7 | 88.6 | 613 | 1520 |
| Example 5 | 12.69 | 2.52 | 162.5 | 91.2 | 585 | 1474 |
| Example 6 | 13.15 | 2.45 | 158.8 | 91.4 | 572 | 1401 |
| Example 7 | 12.07 | 2.42 | 166.8 | 90.9 | 603 | 1459 |
| Example 8 | 11.06 | 2.51 | 170.2 | 91.0 | 574 | 1440 |
| Example 9 | 10.75 | 2.56 | 169.9 | 91.5 | 580 | 1484 |
| Example 10 | 10.37 | 2.52 | 170.8 | 91.6 | 576 | 1452 |
| Example 11 | 12.50 | 2.60 | 163.1 | 90.7 | 585 | 1521 |
| Comparative Example 1 | 15 | 2.20 | 155 | 92.0 | 570 | 1254 |
| Comparative Example 2 | 14.10 | 2.25 | 155.9 | 92.1 | 565 | 1271 |
| Comparative Example 3 | 11.40 | 2.22 | 170.3 | 89.3 | 618 | 1372 |
| Comparative Example 4 | 10.14 | 2.46 | 168.7 | 91.4 | 570 | 1413 |
| Comparative Example 5 | 12.01 | 2.42 | 166.4 | 92.0 | 567 | 1395 |
| Comparative Example 6 | 4.2 | 2.34 | 149.1 | 90.1 | 566 | 1324 |

As can be seen from the experimental results in Table 1, compared with the Comparative Example 1, the battery positive electrode materials of the Example1 to 4 contain active particles of a smaller particle diameter, which enables the prepared batteries to have higher gravimetric energy density, and the volumetric energy density of the batteries of the Example 1 to 4 was increased by 20% compared with that of the Comparative Example 1, because the active particles had higher energy density, and the compaction density of the battery positive electrode materials was further improved after particle stacking optimization, thus improving the volumetric energy density.

Compared with the Comparative Example 2 and 3, the battery positive electrode materials of the Example 5 to 7 had higher compaction density, because the weight ratio of lithium ferromanganese phosphate to active particles of the battery positive electrode materials of the Example 5 to 7 was more appropriate, the active particles of a smaller particle diameter can be effectively filled in the voids between lithium ferromanganese phosphate particles, and the compaction density of the products was significantly improved compared with that of the Comparative Example 2. However, due to the limited size of the voids between lithium ferromanganese phosphate particles, the amount of particles that can be filled in the voids was limited. When the amount of active particles reaches a certain value, the compaction density becomes lower. Therefore, the compaction density of the battery positive electrode material in the Example 7 was lower than that of the Example 5. Experiments showed that when the weight ratio of lithium ferromanganese phosphate to active particles was 1:(0.2-0.35), the battery positive electrode material can have high compaction density. In addition, due to the addition of active particles with higher specific capacity in the Example 5 to 7, the gravimetric energy density of the batteries in the Example 5 to 7 was also improved.

Compared with the Comparative Example 4 to 6, the particle diameter ratio of lithium ferromanganese phosphate to active particles in the battery positive electrode materials of the Examples to 10 was between 3 and 8, and the particles can be tightly stacked. In the Comparative Example 4, the particle diameter difference between lithium ferromanganese phosphate and active particles was large, and there were still many voids in lithium ferromanganese phosphate of a large particle size, that is, the voids of large particles need to be filled with more small particles to achieve close packing. In the Comparative Example 5, the particle diameter difference between lithium ferromanganese phosphate and active particles was small, and the active particles cannot be filled into the voids in lithium ferromanganese phosphate, resulting in decreased compaction density of the material. In the Comparative Example 6, the particle diameter of lithium ferromanganese phosphate was much lower than that of the active particles, and the weight of lithium ferromanganese phosphate was much larger than that of the active particles, so that the number of the lithium ferromanganese phosphate particles to be much greater than that of the active particles and thus the number of the particles was severely out of balance. The battery positive electrode material was stacked in a manner where the active particles are scattered among the lithium ferromanganese phosphate particles, so that it is impossible to achieve good stacking effect, and the compaction density of the material was low.

In the Example 11, secondary filling was carried out on the basis of primary filling, and secondary lithium nickel cobalt manganate can be further filled in the voids remaining after the primary filling. It can be seen from the experimental results that the positive electrode plates of the Example 11 and the Example 1 had higher compaction density, which shows that the secondary filling can effectively improve the compaction density of the positive electrode plates, thus increasing the gravimetric energy density and volumetric energy density of the battery.

It can be seen from the above experimental results that the active particles can be effectively filled in the voids in lithium ferromanganese phosphate by controlling the weight ratio and particle diameter distribution of lithium ferromanganese phosphate and active particles, thus improving the compaction density of the battery positive electrode material. The battery positive electrode material was prepared into a positive electrode plate which was applied to the battery, enabling the battery to have high gravimetric energy density and volumetric energy density.

Described above are exemplary implementations of the present disclosure, which should not be construed as limiting the scope of the present disclosure. It should be noted that a person of ordinary skill in the art may make several improvements and modifications without departing from the principle of the present disclosure. All such modifications and modifications shall fall within the protection scope of the present disclosure.

## Claims

1. A battery positive electrode material, comprising: lithium ferromanganese phosphate particles (11) and active particles (12) dispersed in voids between the lithium ferromanganese phosphate particles (11); the active particles (12) comprising one or more of lithium nickel cobalt manganate particles, lithium nickel cobalt aluminate particles, lithium-rich manganese-based material particles, lithium cobaltate particles, spinel lithium manganate $LiMn_2O_4$ particles and layered lithium manganate $LiMnO_2$ particles; a ratio of the median particle diameter of the lithium ferromanganese phosphate to that of the active particles (12) being between 3 and 8; and in the battery positive electrode material, a content of percentage by weight of the lithium ferromanganese phosphate being between 70% and 90%, and a content of percentage by weight of the active particles (12) being between 10% and 30%.

2. The battery positive electrode material according to claim 1, wherein a median particle diameter of the lithium ferromanganese phosphate particles (11) is between $2\mu m$ and $15\mu m$.

3. The battery positive electrode material according to claim 1 or 2, wherein the median particle diameter of the active particles (12) is between $0.5\mu m$ and $5\mu m$.

4. The battery positive electrode material according to any of claims 1 to 3, wherein the active particles (12) comprise primary active particles (121) and secondary active particles (122), the median particle diameter of the primary active particles (121) is between $0.5\mu m$ and $5\mu m$, and the median particle diameter of the secondary active particles (122) is between $0.1\mu m$ and $2\mu m$.

5. The battery positive electrode material according to any of claims 1 to 4, wherein a weight ratio of the lithium ferromanganese phosphate particles (11) to the active particles (12) is 1:(0.2-0.35).

6. The battery positive electrode material according to any of claims 1 to 5, wherein the lithium ferromanganese phosphate particles (11) comprise $LiMn_xFe_{1-x}PO_4$, wherein $0.5 \leq x \leq 0.9$.

7. The battery positive electrode material according to any of claims 1 to 6, wherein the lithium ferromanganese phosphate particles (11) comprise carbon, and a content of percentage by weight of the carbon in the lithium ferromanganese phosphate particles (11) is between 1% and 3%.

8. The battery positive electrode material according to any of claims 1 to 7, wherein the lithium ferromanganese phosphate particles (11) further comprise a doped element, and the doped element comprises one or more of Ti, V, Co, Ni, Cu, Zn, Mg, Ca, Al, Nb and Mo.

9. The battery positive electrode material according to any of claims 1 to 8, wherein the lithium nickel cobalt manganate particles comprise $LiNi_aCo_bMn_{1-a-b}O_2$, wherein $0<a<1$, $0<b<1$ and $0<1-a-b<1$.

10. The battery positive electrode material according to any of claims 1 to 9, wherein the lithium nickel cobalt manganate particles further comprise a doped element, and the doped element comprises one or more of Ti, V, Fe, Cu, Zn, Mg, Ca, Al, Nb and Mo.

11. The battery positive electrode material according to any of claims 1 to 10, wherein the lithium nickel cobalt aluminate particles comprise $LiNi_mCo_nAl_{1-m-n}O_2$, wherein $0<m<1$, $0<n<1$ and $0<1-m-n<1$.

12. The battery positive electrode material according to any of claims 1 to 11, wherein the lithium nickel cobalt aluminate particles further comprise a doped element, and the doped element comprises one or more of Ti, V, Mn, Fe, Cu, Zn, Mg, Ca, Nb and Mo.

13. The battery positive electrode material according to any of claims 1 to 12, wherein the lithium-rich manganese-based material particles comprise $yLi_2MnO_3 \cdot (1-y)LiMO_2$, wherein $0<y<1$, and the M comprises at least one of Mn, Ni or Co.

14. The battery positive electrode material according to any of claims 1 to 13, wherein the lithium-rich manganese-based material particles further comprise a doped element, and the doped element comprises one or more of Ti, V, Fe, Co, Cu, Zn, Mg, Ca, Nb and Mo.

15. The battery positive electrode material according to any of claims 1 to 14, wherein a compaction density of the battery positive electrode material is between $2.4 g/cm^3$ and $3.2 g/cm^3$.

16. The battery positive electrode material according to any of claims 1 to 15, wherein there is no agglomeration between the lithium ferromanganese phosphate particles (11) and the active particles (12), and the active particles (12) are not attached to the surface of the lithium ferromanganese phosphate particles (11) in the form of coating.

17. The battery positive electrode material according to any of claims 1 to 16, wherein the active particles (12) have higher compaction density than that of the lithium ferromanganese phosphate particles (11).

18. A positive electrode plate, comprising: a current collector and a positive electrode material layer arranged on the current collector, the positive electrode material layer comprising the battery positive electrode material according to any of claims 1 to 17.

19. A secondary battery, comprising: a positive electrode, a negative electrode, a separator and an electrolyte, the positive electrode comprising the positive electrode plate according to claim 18.

~10

11

12

FIG. 1

FIG. 2

~10

FIG. 3

FIG. 4

## INTERNATIONAL SEARCH REPORT

| | International application No. |
|---|---|
| | **PCT/CN2022/120833** |

**A. CLASSIFICATION OF SUBJECT MATTER**

H01M 4/505(2010.01)i; H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 正极, 磷酸锰铁锂, 磷酸铁锰锂, 钴酸锂, 磷酸铁锂, 锰酸锂, 镍钴锰酸锂, 粒径, 颗粒直径, battery, cathode, lithium, diameter, D50, manganese, ferrous, phosphate, particle, composite

**C. DOCUMENTS CONSIDERED TO BE RELEVANT**

| Category* | Citation of document, with indication, where appropriate, of the relevant passages | Relevant to claim No. |
|---|---|---|
| X | CN 103618084 A (LIU TIEJIAN) 05 March 2014 (2014-03-05) description, paragraphs 3-36 | 1-19 |
| A | CN 107528050 A (SHANGHAI MAPLE AUTOMOBILE CO., LTD.) 29 December 2017 (2017-12-29) entire document | 1-19 |
| A | CN 109671903 A (CHINA AUTOMOTIVE BATTERY RESEARCH INSTITUTE CO., LTD.) 23 April 2019 (2019-04-23) entire document | 1-19 |
| A | US 2015349330 A1 (NINDGE AMPEREX TECHNOLOGY LTD.) 03 December 2015 (2015-12-03) entire document | 1-19 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 November 2022** | **30 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 345 950 A1**

<table>
<tr><td colspan="2" rowspan="2" align="center">INTERNATIONAL SEARCH REPORT<br>Information on patent family members</td><td colspan="2">International application No.</td></tr>
<tr><td colspan="2" align="center">**PCT/CN2022/120833**</td></tr>
</table>

| Patent document cited in search report | | | Publication date (day/month/year) | Patent family member(s) | | | Publication date (day/month/year) |
|---|---|---|---|---|---|---|---|
| CN | 103618084 | A | 05 March 2014 | None | | | |
| CN | 107528050 | A | 29 December 2017 | None | | | |
| CN | 109671903 | A | 23 April 2019 | None | | | |
| US | 2015349330 | A1 | 03 December 2015 | US | 2018366720 | A1 | 20 December 2018 |
| | | | | CN | 105185987 | A | 23 December 2015 |

Form PCT/ISA/210 (patent family annex) (January 2015)

**REFERENCES CITED IN THE DESCRIPTION**

**Patent documents cited in the description**

- CN 202111126603